# EUROPÄISCHE PATENTSCHRIFT

(11) **EP 3 469 884 B1**
(45) Veröffentlichungstag und Bekanntmachung des Hinweises auf die Patenterteilung: **12.08.2020**
(21) Anmeldenummer: 18195714.3
(22) Anmeldetag: 20.09.2018
(51) Int. Cl.: A01F 15/04, A01F 15/08

(54) **QUADERBALLENPRESSE MIT IN EINE SCHWINGUNG VERSETZBAREN SEITENWÄNDEN**
SQUARE BALER COMPRISING OSCILLATING SIDEWALLS
PRESSE À BALLES RECTANGULAIRES POURVUE DE PAROIS LATÉRALLES POUVANT ÊTRE ENTRAÎNÉES DANS UN MOUVEMENT D'OSCILLATION

(30) Priorität: 27.09.2017 DE 102017217221
(43) Veröffentlichungstag der Anmeldung: 17.04.2019
(73) Patentinhaber: Deere & Company, Moline, IL 61265 (US)
(72) Erfinder: Gresch, Valentin, 68163 Mannheim (DE)
(74) Vertreter: Holst, Sönke

(56) Entgegenhaltungen:
- EP-A1- 1 795 065
- EP-A1- 2 022 319
- EP-A2- 0 273 067

## Beschreibung

Die Erfindung betrifft eine Quaderballenpresse mit einem tragenden Rahmen, an dem eine Presskammer mit positionsverstellbaren Seitenwänden abgestützt ist, der zu pressendes Material mittels eines sich hin und her bewegenden Stopfers zuführbar ist.

### Stand der Technik

Quaderballenpressen werden zur Ernte von landwirtschaftlichem Erntegut wie Heu, Silage oder Stroh eingesetzt. Die Quaderballenpresse wird von einem Traktor gezogen und über eine Zapfwelle mechanisch angetrieben. Das Erntegut wird üblicherweise in einer Vorkammer vorverdichtet und danach in der leicht konvergierenden Presskammer von einem reziprok arbeitenden Stopfer gegen den bereits existierenden Ballen verdichtet. Derartige Ballenpressen können auch verwendet werden, um anderes Material (z.B. Abfälle) zu Ballen zu verdichten.

Die Seitenwände sowie die obere Wand der Presskammer sind dabei üblicherweise (vgl. beispielsweise EP 0 346 586 A2) als mit Längsträgern versteifte Stahlbleche ausgeführt. Der Unterboden der Presskammer ist hingegen in der Regel fest mit dem tragenden Rahmen der Presse verbunden. Die Seitenwände und ggf. die obere Wand sind im vorderen Bereich der Presskammer schwenkbar mit dem Rahmen der Quaderballenpresse verbunden, so dass die Seitenwände seitlich und ggf. die obere Wand nach oben und unten verschwenkt werden können. Im hinteren Bereich der Quaderballenpresse sind die Wände über Hydraulikzylinder untereinander oder mit dem Rahmen der Quaderballenpresse verbunden. Über diese Hydraulikzylinder werden die Wände gegen das Erntegut, d.h. den sich formenden Ballen, gepresst. Dadurch werden auf die Seiten des Ballens wirkende Flächenkräfte erzeugt. Diese Kräfte wirken statisch und ermöglichen zusammen mit der Presskraft des Stopfers eine Verdichtung des Ernteguts.

Abhängig von der Art des Ernteguts werden unterschiedliche Drücke an die Wände angelegt. So wird bei Silage mit 5 - 40 bar, bei Heu mit 60 - 150 bar und bei Stroh mit 100 - 180 bar Hydraulikdruck gearbeitet. Im Stand der Technik können Ballendichten von etwa 160 - 200 kg/m³ in Stroh erreicht werden. Jedoch ist die Dichteverteilung innerhalb des Ballens aufgrund der physikalischen Eigenschaften von Halmgütern in der Regel nicht homogen. Die höchsten Dichten werden an der Ballenober-bzw. -unterseite erzielt, da dort der Ballen durch das Bindegarn zusammengehalten wird. Im Innenraum des Ballens ist die Dichte jedoch in der Regel deutlich geringer.

Die EP 0 803 183 A1 beschreibt eine Ballenpresse mit einer ersten Verdichtungskammer, in der das Erntegut in der oben beschriebenen, konventionellen Weise mit einem Stopfer verdichtet wird. Anschließend wird der Ballen in eine zweite Verdichtungskammer überführt, in welcher er durch einen weiteren Stopfer mit einem konstanten Druck beaufschlagt wird.

Der zweite Stopfer kann durch einen Vibrator in eine Schwingbewegung versetzt werden, um das Setzen des Materials in der zweiten Verdichtungskammer zu begünstigen. Diese Ballenpresse ist wegen der zweiten Verdichtungskammer relativ aufwändig aufgebaut. Die EP 2 022 319 A1 beschreibt eine Quaderballenpresse mit bewegten Seitenwänden.

### Aufgabe

Zur Reduktion der Kosten für den Transport der Ballen sowie zur Erhöhung der Ballenqualität wäre es wünschenswert, mit wenig aufwändigen Maßnahmen eine höhere Dichte sowie eine homogenere Dichteverteilung in einer Quaderballenpresse zu erzielen.

### Lösung

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, dass zusätzlich zu den statischen Flächenkräften dynamische Kräfte (Vibrationen) an den Seitenwänden und optional auch auf der oberen und/oder unteren Wand der Presskammer aufgebracht werden. Dadurch wird mit einfachen Maßnahmen zum einen die Dichte in den seitlichen Bereichen des Ballens erhöht, was eine homogenere Dichteverteilung zur Folge hat. Zum anderen wird auch die Gesamtdichte des Ballens erhöht.

Die Seitenwände können mit beispielsweise keilförmigen oder mit beliebiger anderer Form versehener Verjüngungen, deren Form beispielsweise mittels einer dynamischen Simulation oder durch Versuche bestimmt werden kann, ausgestattet sein, was die Verdichtung des Ernteguts begünstigt.

Die Seitenwände können gegensinnig antreibbar sein, was zur Auslöschung oder zumindest Verminderung der resultierenden Schwingbewegung des Rahmens führt.

Die Seitenwände können in ihrem in Gutflussrichtung rückwärtigen Bereich durch einen ersten Aktor statisch positionsverstellbar und durch einen zweiten Aktor, der bezüglich der Gutflussrichtung dem ersten Aktor vorgelagert an den Seitenwänden angreift, in die vibrierende Bewegung versetzbar sein.

Der zweite Aktor kann einen Massenschwinger und einen elektrisch oder hydraulisch betriebenen Antriebsmotor umfassen.

Die Schwingungsfrequenz und/oder -amplitude des zweiten Aktors kann variierbar sein. Der erste Aktor und/oder der zweite Aktor können mit einer Steuereinheit verbunden sein, die betreibbar ist, die Anpresskraft des ersten Aktors und/oder die Schwingungsfrequenz und/oder -amplitude des zweiten Aktors abhängig von einer oder mehreren der folgenden Größen zu kontrollieren: durch einen Bediener eingegebene oder sensorisch erkannte Art des zu pressenden Materials, bei dem es sich insbesondere um Erntegut handelt, sensorisch erfasste Feuchtigkeit des zu pressenden Materials, Presskraft des Stopfers, gemessener oder anhand vorausschauender Daten evaluierter Massedurchsatz der Quaderballenpresse (der z.B. gemäß der Offenbarung der US 2016/0088798 A1 ermittelt werden kann), Fahrgeschwindigkeit, Art des Presszyklus, Position des Stopfers, Druck des ersten Aktors, vorgesehene Zielgrößen des Ballens, wie Ballenlänge, Ballengewicht, Ballendichte, aktuelle Kenngrößen des Ballens, wie aktuelle Ballenlänge, Ballengewicht, berechnete Ballendichte, und/oder Garnspannung an den Knotern. Im Gegensatz zu herkömmlichen Pressdichtenregelungen kann demnach bei dem beschriebenen System nicht nur die statische Anpresskraft der Seitenwände, sondern auch die dynamische Anpresskraft eingestellt bzw. basierend auf Maschinen- und Prozessparametern geregelt werden. Ziel der Regelung ist dabei unter anderem die vorgegebene Pressdichte zu erreichen, ohne die maximale Presskraft des Stopfers zu überschreiten. Durch die Kombination von dynamischer und statischer Verdichtung lässt sich für einen vorgegebenen Verdichtungsgrad die durch Reibung an der Innenseite der Seitenwände benötigte Presskraft reduzieren.

### Ausführungsbeispiel

In der Zeichnung ist ein nachfolgend näher beschriebenes Ausführungsbeispiel der Erfindung dargestellt. Es zeigt:
- Fig. 1: eine seitliche Ansicht eines Ackerschleppers mit einer angehängten Quaderballenpresse, und
- Fig. 2: eine Draufsicht auf die Presskammer der Quaderballenpresse der Figur 1.

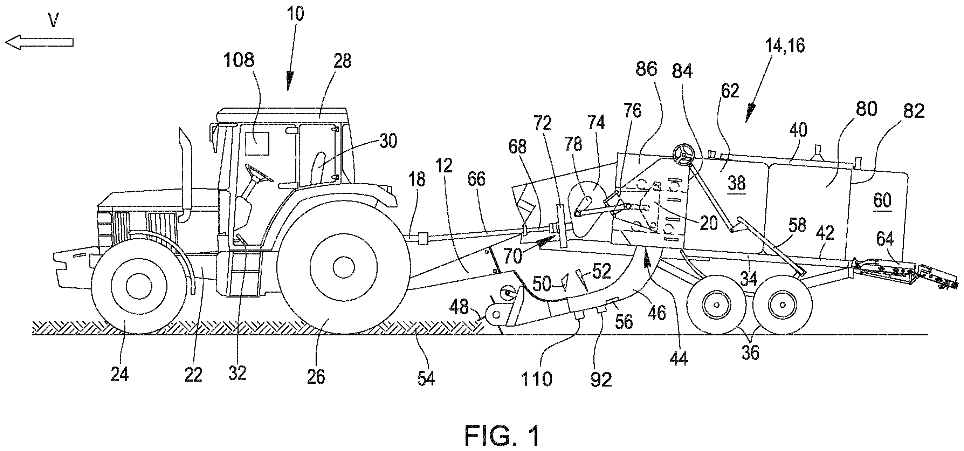

Die Figur 1 zeigt ein landwirtschaftliches Arbeitsfahrzeug 10 in Form eines Ackerschleppers, der über eine Deichsel 12 eine Last 14 in Form einer Quaderballenpresse 16 zieht. Eine Zapfwelle 18 dient zum Antrieb beweglicher Elemente der Last 14 und insbesondere eines Stopfers 20. Das Arbeitsfahrzeug 10 baut sich auf einem Fahrgestell 22 auf, das sich auf lenkbaren Vorderrädern 24 und antreibbaren Hinterrädern 26 abstützt und eine Kabine 28 trägt, in der sich ein Bedienerarbeitsplatz 30 befindet. Mittels einer Eingabeeinrichtung 32 in Form eines Pedals oder eines Fahrhebels, der ohne dauerhafte Bedienerinteraktion eine Sollgeschwindigkeit vorgeben kann, kann in einer manuellen Betriebsart die Vortriebsgeschwindigkeit des Arbeitsfahrzeugs 10 durch einen Bediener vorgegeben werden.

Die Quaderballenpresse 16 dient zum Herstellen quaderförmiger Ballen. Die Quaderballenpresse 16 weist einen Rahmen 34 auf, der auf als Tandemfahrwerk ausgeführten Bodenstützrädern 36 abgestützt ist. An den Rahmen 34 ist die Deichsel 12 angeschlossen, welche sich von diesem aus nach vorn erstreckt und so ausgebildet ist, dass sie an das Arbeitsfahrzeug 10 angeschlossen werden kann. Eine Gelenkwelle 66 der Quaderballenpresse 16 wird mit der Zapfwelle 18 des Arbeitsfahrzeugs 10 verbunden, um Leistung zum Antreiben verschiedener angetriebener Komponenten der Quaderballenpresse 16 bereitzustellen. Ein Pressraum 38 in Form einer Kammer von rechteckförmigem Querschnitt wird teilweise von einem Gehäuseoberteil 40 und einem Gehäuseunterteil 42 gebildet, wobei der Gehäuseunterteil 40 mit einem Guteinlass 44 versehen ist, an den ein gekrümmter Zufuhrkanal 46 angeschlossen ist. Die Seitenwände 80 des Pressraums 38 erstrecken sich von einem vorderen Ende 84 bis zu einem hinteren Ende 82 und sind durch Aktoren 88 positionsverstellbar, so dass der Querschnitt des Pressraums 38 veränderbar ist. Über die Einstellung der Aktoren 88 lässt sich der seitliche Anpressdruck auf den Ballenteil 62 und somit die Pressdichte variieren. Den verstellbaren Seitenwänden 80 vorgelagert sind fest angebrachte Seitenwände 86, zwischen denen sich der Stopfer 20 hin- und herbewegt. Auch der obere Gehäuseoberteil 40 kann durch einen Aktor 88 verstellbar und ggf. durch einen zweiten Aktor 90 in Schwingung versetzbar sein.

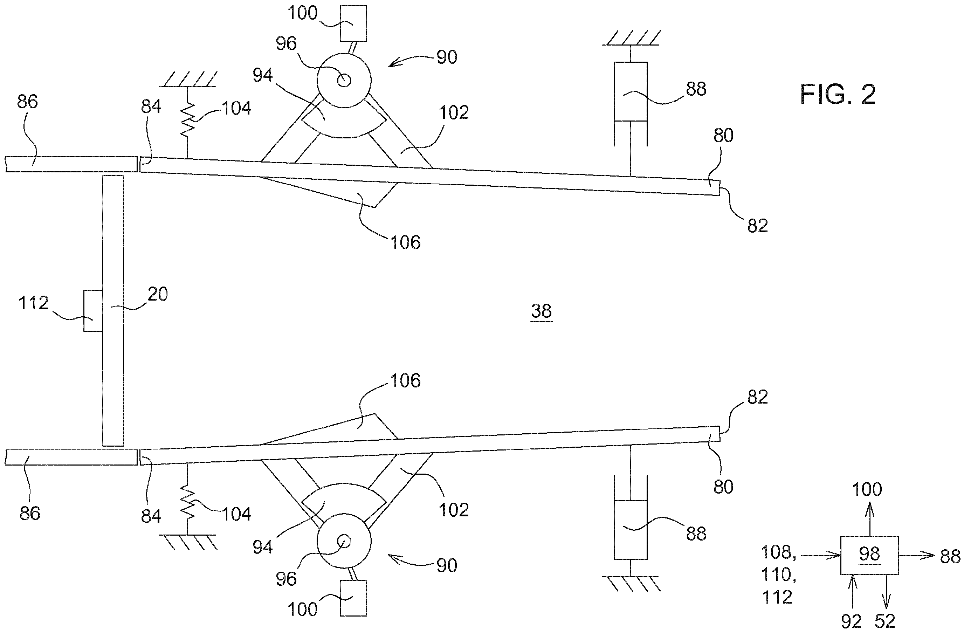

Eine Zufuhreinrichtung weist eine Erntegutaufnahmevorrichtung 48 in Form eines Aufnehmers mit einem zugeordneten Niederhalter, eine Verdichtergabel 50 und eine Ladegabel 52 auf. Die Erntegutaufnahmevorrichtung 48 umfasst eine zur Mitte fördernden Schnecke und ist vor dem Zufuhrkanal 46 angeordnet, um ein Schwad 54 von Erntegut vom Boden aufzuheben und es an die Verdichtergabel 50 abzugeben, die dazu dient, Erntegut in dem Zufuhrkanal 46 zu verdichten, bis sich eine Ladung von vorgewählter Dichte in dem Zufuhrkanal 46 angesammelt hat und mittels der Ladegabel 52 über den Guteinlass 44 in den Pressraum 38 hineingestopft wird. An einer vorderen unteren Stelle des Zufuhrkanals 46 ist eine federbelastete Klappe 56 schwenkbar montiert, die in Abhängigkeit der Dichte des in dem Zufuhrkanal 46 befindlichen Erntegutes schwenkt und über einen Sensor 92 anzeigt, sobald eine gewünschte Pressgutdichte in dem Zufuhrkanal 46 erreicht ist, um über eine Kontrolleinheit 98 (vgl. Figur 2) die Bestromung eines elektrischen Steuerkreislaufs zu bewirken, der eine entsprechende Antriebsverbindung herstellt, die die Ladegabel 52 aktiviert, so dass sie die Ladung des Ernteguts in den Pressraum 38 bewegt. Im Folgenden beziehen sich Richtungsangaben, wie vorn, hinten stets auf die Vorwärtsrichtung V des Arbeitsfahrzeugs 10 und der Quaderballenpresse 16, die in der Figur 1 von rechts nach links verläuft.

Wenn die Ladung des Ernteguts in den Pressraum 38 eingebracht wurde, wird der Stopfer 20 mittels eines geeigneten Antriebs in einer gesteuerten Reihenfolge zeitlich nach der Ladegabel 52 betätigt, um das Erntegut nach hinten in den Pressraum 38 zu bewegen, wo es in einem Stapel verdichtet wird. Nachdem der Ballen von verdichtetem Material eine vorgewählte Länge erreicht hat, wird ein Nadelzusammenbau 58 zum Liefern von Bindegarn, der mehrere gekrümmte Nadeln enthält, betätigt, um mehrere Garnstränge einer entsprechenden Anzahl nicht gezeigter Knoter zuzuführen, die so wirken, dass sie Garnlängen um die vorgewählte Länge der Stapel legen, um einen Ballen 60 zu bilden, der zum Entladen fertig ist, was dann geschieht, wenn er von einem noch nicht fertigen Ballenteil 62 aus dem rückwärtigen Endbereich des Pressraums 38 herausgedrückt wird, wenn er in seiner Länge zunimmt, weil neue Ladungen von Erntegut in den Pressraum 38 gestopft werden.

Der Stopfer 20 ist für eine hin- und hergehende Bewegung in dem Pressraum 38 zwischen einer zurückgezogenen Stellung vor dem Guteinlass 44 und einer (in Figur 1 gezeigten) teilweise ausgefahrenen Stellung über dem Guteinlass 44 ausgelegt, aus der er sich noch weiter nach hinten bewegen kann, bis er gegen einen Ballenteil 62 stößt. Diese Bewegung des Stopfers 20 hat zum Ergebnis, dass Ladungen von Erntegut, die aus dem Zufuhrkanal 46 in den Pressraum 38 eingeführt werden, gegen einen Stapel von Erntegut verdichtet werden, was den teilweise gebildeten Ballenteil 62 und/oder den kompletten Ballen 60 einschließt. Zum schonenden Ablegen des Ballens 60 auf dem Erdboden ist am hinteren Ende des Rahmens 34 als rückwärtige Verlängerung des Gehäuseunterteils 42 eine Ablagevorrichtung 64 angebracht.

Der Antrieb des Stopfers 20 erfolgt über die Zapfwelle 18 des Arbeitsfahrzeugs 10, die über eine Gelenkwelle 66 eine Eingangswelle 68 der Antriebseinrichtung 70 des Stopfers 20 antreibt. Die Eingangswelle 68 treibt ein Schwungrad 72 und über ein Getriebe 74 eine Kurbel 78 an, deren Bewegung über eine Pleuelstange 76 auf den Stopfer 20 übertragen wird.

Die Figur 2 zeigt einen horizontalen Schnitt durch den Pressraum 38 und dessen Seitenwände 80, wobei sich der Stopfer 20 in seiner rückwärtigen Umkehrposition zwischen den fest angebrachten Seitenwänden 86 befindet. Die Seitenwände 80 sind in der Nähe des rückwärtigen Endes 82 mit ersten Aktoren 88 in Form von Hydraulikzylindern 88 gekoppelt, die sich zwischen den Seitenwänden 80 und dem Rahmen der Quaderballenpresse 16 erstrecken. Die ersten Aktoren 88 sind demnach eingerichtet, die Seitenwände 80 mit einem statischen Druck zu beaufschlagen, der über eine Ventileinrichtung und die Steuereinrichtung 98 kontrollierbar ist. Es wäre auch denkbar, nur einen einzigen, ersten Aktor 88 zu verwenden und ihn zwischen den Seitenwänden 80 anzubringe, wie in EP 0 346 586 A2 gezeigt.

Zudem sind die Seitenwände 80 bezüglich der Flussrichtung des zu pressenden Materials, die sich in der Figur 2 von links nach rechts erstreckt, vor den ersten Aktoren 88 (in der dargestellten Ausführungsform etwa auf einem Drittel der Länge der Seitenwände 80, dem vorderen Ende 84 näher als dem hinteren Ende 82 benachbart) mit zweiten Aktoren 90 gekoppelt, welche ausgebildet sind, dynamische Kräfte (Vibrationen, Rütteln oder Schwingungen) auf die Seitenwände 80 auszüben, wobei die Schwingfrequenz der dynamischen Kräfte höher ist als die Frequenz, mit welcher der Stopfer 20 das Material im Pressraum 38 verdichtet. In der dargestellten Ausführungsform sind die zweiten Aktoren 90 als Massenschwinger ausgeführt, d.h. sie umfassen eine exzentrische Masse 94, die mittels eines Motors 100, der hydraulisch oder elektrisch betrieben sein kann, um eine Welle 96 drehbar ist, die über eine Verstrebung 102 starr mit der Seitenwand 80 gekoppelt ist. Die Welle 96 oder die Verstrebung 102 oder die Seitenwand 80 kann an einer beliebigen Stelle durch eine Feder 104 am Rahmen 34 abgestützt sein, um die Schwingbewegung der Seitenwand 80 zu ermöglichen. Eine weitere elastische (Feder-) oder drehbare (Scharnier-oder Gelenk-) Verbindung kann zwischen den ersten Aktoren 88 und den Seitenwänden 80 vorgesehen sein, um die ersten Aktoren 88 von der Schwingbewegung zu isolieren. Es wäre auch denkbar, die zweiten Aktoren 90 zwischen den ersten Aktoren 88 und der Seitenwand 80 anzuordnen. Die auf den beiden Seiten der Quaderballenpresse 16 angeordneten Massen 94 drehen sich synchron und gegensinnig, um möglichst wenig Vibrationen im Rahmen 34 zu erzeugen.

Demnach sind die Seitenwände 80 nicht nur in der üblichen Weise durch die ersten Aktoren 88 mit einem statischen Druck beaufschlagbar, der durch die Steuereinheit 98 kontrollierbar ist, sondern auch durch die zweiten Aktoren 90 mit einem dynamischen Druck beaufschlagbar, der sich als sinusförmige Schwingung auswirkt, deren Amplitude und/oder Frequenz durch die Steuereinrichtung 98 kontrollierbar ist. Die Frequenz des Aktors 90 wird durch die Drehzahl des Motors 100 festgelegt, wobei wenn man ggf. Abweichungen von der Eigenfrequenz des Massenschwingers hinnimmt, oder letztere könnte beispielsweise durch einen weiteren, von der Steuereinrichtung 98 kontrollierten Verstellantrieb beeinflusst werden, der die Masse 94 in radialer Richtung gegenüber der Welle 96 bewegt. Die Amplitude des Aktors 90 kann durch den Motor 100 festgelegt werden, der zumindest zwischen einem ein- und ausgeschalteten Zustand umschaltbar ist, jedoch vorzugsweise auch zwischen einer Drehzahl von 0 und einer Maximaldrehzahl in Stufen oder stufenlos drehzahleinstellbar ist. Eine Kontrolle von Frequenz und Amplitude könnte auch in der Weise erfolgen, dass man als zweiten Aktor 88 einen elektromagnetischen oder hydraulischen Antrieb verwendet, der die Seitenwand 80 in der Art eines Lautsprechers antreibt.

Im Zusammenwirken mit keilförmigen Verjüngungen 106 an den Innenseiten der Seitenwände 80, die den zweiten Aktoren 90 benachbart angeordnet sind, führt die durch die zweiten Aktoren 90 erzeugte Schwingung oder Vibration der Seitenwände 80 zu einem Verdichten des Materials (Ernteguts) und vermindert zudem die Reibung zwischen dem Material und den Seitenwänden 80.

Die Steuereinrichtung 98 kann den statischen Druck der ersten Aktoren 88 und/oder den dynamischen Druck (d.h. die Amplitude und/oder Frequenz der Schwingung) der zweiten Aktoren 90 abhängig von einer oder mehreren Größen kontrollieren. Dazu können die Betriebsparameter der Aktoren 88, 90 über die Bedienerschnittstelle 108 eingegeben werden, oder sie werden von der Steuereinrichtung 98 selbsttätig festgelegt. In diesem Fall können die von der Steuereinrichtung 98 gewählten Betriebswerte der Aktoren 88, 90 auf der Bedienerschnittstelle 108 angezeigt und durch ggf. den Bediener übersteuert werden.

So kann die durch einen Bediener über eine Bedienerschnittstelle 108 eingegebene oder mittels eines geeigneten Sensors (z.B. Kamera mit Bildverarbeitung) erkannte Art des zu pressenden Materials (z.B. Getreidestroh, Maisstroh, Silage, Heu) berücksichtigt werden. Generell werden sowohl die statischen als auch die dynamischen Drücke umso größer sein, je fester oder zäher das zu pressende Material ist. Sie werden daher bei Stroh höher als bei Gras sein. Zudem kann die mittels eines Sensors 110 erfasste Feuchtigkeit des zu pressenden Materials berücksichtigt werden. Der Feuchtigkeitssensor 110 kann, anders als in der Figur 1 gezeigt, im vordersten Bereich des Pressraums 36 bodenseitig angebracht sein. Die Feuchtigkeitsmessung ist bei schon verdichtetem Material erfahrungsgemäß einfacher und genauer als im Zufuhrkanal 46, wo das Erntegut noch relativ lose ist. Generell werden sowohl die statischen als auch die dynamischen Drücke umso größer sein, je trockener das zu pressende Material ist.

Auch kann die Steuereinrichtung 98 die mittels eines in den Antriebsstrang des Stopfers 20 eingefügten Sensors 112 erfasste Presskraft des Stopfers 20 berücksichtigen und zumindest die dynamischen Drücke bei steigender Presskraft vergrößern, während die statischen Drücke derart geregelt werden können, dass eine gewünschte Presskraft eingehalten oder eine maximale Presskraft nicht überschritten wird.

Als weitere Eingangsgrößen zur Ansteuerung des ersten und/oder zweiten Aktors 88, 90 kann die Steuereinrichtung 98 den mittels eines geeigneten Sensors (z.B. zur Messung des Antriebsmoments der Erntegutaufnahmevorrichtung 48 oder der Verdichtergabel 50) gemessenen oder anhand vorausschauender Daten (z.B. mittels einer auf den Schwad blickenden Kamera und einem Bildverarbeitungssystem, vgl. DE 103 51 861 A1, oder bei einem vorhergehenden Arbeitsvorgang abgespeicherter Daten hinsichtlich der Dichte des Schwads, vgl. DE 10 2017 207 347 A1) evaluierten Massedurchsatz der Quaderballenpresse 16 und/oder deren Fahrgeschwindigkeit verwenden. Zumindest die dynamischen Kräfte des zweiten Aktors 90 werden umso größer sein, je höher der Erntegutdurchsatz ist.

Auch kann die Steuereinrichtung 98 als Eingangsgrößen zur Ansteuerung des ersten und/oder zweiten Aktors 88, 90 vorgesehene Zielgrößen des Ballens, wie Ballenlänge, Ballengewicht und Ballendichte berücksichtigen, die mittels der Bedienerschnittstelle 108 eingegeben werden können. Auch hier werden die dynamischen Kräfte des zweiten Aktors 90 mit steigenden Zielgrößen ansteigen. Zur Einstellung des ersten Aktors 88 kann auf den Stand der Technik verwiesen werden, z.B. EP 0 346 586 A2, WO 2011/039140 A1 und die dort zitierten Dokumente. Zudem kann die Steuereinrichtung 98 als Eingangsgrößen zur Ansteuerung des ersten und/oder zweiten Aktors 88, 90 aktuelle Kenngrößen des Ballens, wie die sensorisch erfasste Ballenlänge, das Ballengewicht und die anhand der Betriebsparameter der Quaderballenpresse 16 berechnete Ballendichte verwenden. Auch hier werden die dynamischen Kräfte des zweiten Aktors 90 mit steigenden Kenngrößen ansteigen. Analog kann die Steuereinrichtung 98 als Eingangsgrößen zur Ansteuerung des ersten und/oder zweiten Aktors 88, 90 die Garnspannung an den Knotern berücksichtigen. Je größer die Garnspannung ist, umso größer werden die Drücke der beiden Aktoren 88, 90 sein. Auch kann die Steuereinrichtung 98 als Eingangsgrößen zur Ansteuerung des zweiten Aktors 90 den Druck des ersten Aktors 88 berücksichtigen. Je größer der Druck dort ist, umso größer wird auch der Druck des zweiten Aktors 88 sein, um das Erntegut effektiv zu komprimieren.

Weitere Eingangsgröße der Steuereinrichtung 98 zur Ansteuerung des ersten und/oder zweiten Aktors 88, 90 kann die Art des Presszyklus sein, d.h. ob frisches Material durch die Ladegabel 52 in die Presskammer 38 eingeführt wird bzw. wurde oder nicht. Unmittelbar nach dem Einführen frischen Materials kann insbesondere die Amplitude des zweiten Aktors 90 größer als nach Ablauf einer bestimmten Zeit nach der Einführung des Materials sein, um das Material rasch zu verdichten, oder sie nach dem Einführen neuen Materials kleiner als nach Ablauf einer bestimmten Zeit nach der Einführung des Materials sein, um zunächst die Presswirkung des Stopfers 20 abzuwarten und anschließend die Amplitude zu vergrößern und das Material dann effektiver durch die Vibration zu verdichten. Analog kann die Steuereinrichtung die Position des Stopfers 20 berücksichtigen und die Amplitude des zweiten Aktors 90 dann am größten wählen, wenn der Stopfer 20 sich im Bereich des rückwärtigen Umkehrpunkts befindet, da er dann mit dem Erntegut zusammenwirkt und das dann zusammengedrückte Erntegut durch die vom zweiten Aktor 90 erzeugte Schwingung besonders effektiv komprimierbar ist. In der Nähe des vorderen Umkehrpunkts des Stopfers 20 kann die Amplitude des zweiten Aktors 90 demgegenüber in Energie sparender Weise kleiner sein. Alternativ wäre auch die umgekehrte Betriebsweise denkbar. So wird während der Stopfer 20 sich am hinteren Umkehrpunkt befindet, die Drehzahl des Aktors 90 reduziert, um die vom Stopfer 20 aufzubringende Kraft zu reduzieren. Anschließend wird die vom Aktor 90 erzeugte dynamische Kraft für eine verbesserte Nachverdichtung wieder erhöht.

## Patentansprüche

1. Quaderballenpresse (16) mit einem tragenden Rahmen (34), an dem eine Presskammer (38) mit positionsverstellbaren Seitenwänden (80) abgestützt ist, der zu pressendes Material mittels eines sich hin und her bewegenden Stopfers (20) zuführbar ist, **gekennzeichnet durch** eine Einrichtung zum Versetzen der Seitenwände (80) in eine vibrierende Bewegung.

2. Quaderballenpresse (16) nach Anspruch 1, wobei die Seitenwände (80) mit Verjüngungen (106) ausgestattet sind.

3. Quaderballenpresse (16) nach Anspruch 1 oder 2, wobei die Seitenwände (80) gegensinnig in eine vibrierende Bewegung versetzbar sind.

4. Quaderballenpresse (16) nach einem der Ansprüche 1 bis 3, wobei die Seitenwände (80) durch einen ersten Aktor (88) statisch positionsverstellbar sind und durch einen zweiten Aktor (90) in die vibrierende Bewegung versetzbar sind.

5. Quaderballenpresse (16) nach Anspruch 4, wobei der erste Aktor (88) in ihrem in Gutflussrichtung rückwärtigen Bereich mit der Seitenwand (80) zusammenwirkt und/oder der zweite Aktor (90) bezüglich der Gutflussrichtung dem ersten Aktor (88) vorgelagert ist.

6. Quaderballenpresse (16) nach Anspruch 4 oder 5, wobei der zweite Aktor (90) einen Massenschwinger und einen Antriebsmotor (100) umfasst.

7. Quaderballenpresse (16) nach einem der Ansprüche 4 bis 6, wobei die Schwingungsfrequenz und/oder-amplitude des zweiten Aktors (90) variierbar ist.

8. Quaderballenpresse (16) nach einem der Ansprüche 4 bis 7, wobei der erste Aktor (88) und/oder der zweite Aktor (90) mit einer Steuereinheit (98) verbunden sind, die betreibbar ist, die Anpresskraft des ersten Aktors (88) und/oder die Schwingungsfrequenz und/oder-amplitude des zweiten Aktors (90) abhängig von einer oder mehreren der folgenden Größen zu kontrollieren: durch einen Bediener eingegebene oder sensorisch erkannte Art des zu pressenden Materials, insbesondere Ernteguts, sensorisch erfasste Feuchtigkeit des zu pressenden Materials, Presskraft des Stopfers (20), gemessener oder anhand vorausschauender Daten evaluierter Massedurchsatz der Quaderballenpresse (16), Fahrgeschwindigkeit, Art des Presszyklus, Position des Stopfers (20), Druck des ersten Aktors (88), vorgesehene Zielgrößen des Ballens (60, 62), wie Ballenlänge, Ballengewicht, Ballendichte, aktuelle Kenngrößen des Ballens (60, 62), wie aktuelle Ballenlänge, Ballengewicht, berechnete Ballendichte, und/oder Garnspannung an den Knotern.

## Claims

1. Square baler (16) with a supporting frame (34), a pressing chamber (38) with positionally adjustable side walls (80) being supported thereon, and material to be pressed being able to be supplied thereto by means of a stuffer (20) moving in a reciprocating manner, **characterized by** a device for setting the side walls (80) in a vibrating motion.

2. Square baler (16) according to Claim 1, wherein the side walls (80) are provided with tapered portions (106) .

3. Square baler (16) according to Claim 1 or 2, wherein the side walls (80) may be set in a vibrating motion in opposing directions.

4. Square baler (16) according to one of Claims 1 to 3, wherein the side walls (80) are positionally adjustable in a static manner by a first actuator (88) and may be set in the vibrating motion by a second actuator (90).

5. Square baler (16) according to Claim 4, wherein the first actuator (88) in its rear region in the direction of flow of crop material cooperates with the side wall (80) and/or the second actuator (90) is mounted upstream of the first actuator (88) relative to the direction of flow of the crop material.

6. Square baler (16) according to Claim 4 or 5, wherein the second actuator (90) comprises a mass oscillator and a drive motor (100).

7. Square baler (16) according to one of Claims 4 to 6, wherein the oscillation frequency and/or amplitude of the second actuator (90) is variable.

8. Square baler (16) according to one of Claims 4 to 7, wherein the first actuator (88) and/or the second actuator (90) are connected to a control unit (98) which is able to be operated to control the contact force of the first actuator (88) and/or the oscillation frequency and/or amplitude of the second actuator (90) depending on one or more of the following variables: the type of material to be pressed, in particular of the harvested crops, input by an operator or detected by sensor, the moisture of the material to be pressed detected by sensor, the pressing force of the stuffer (20), the mass throughput of the square baler (16) which is measured or evaluated using predictive data, the travelling speed, the type of pressing cycle, the position of the stuffer (20), the pressure of the first actuator (88), the designated target variables of the bale (60, 62), such as bale length, bale weight, bale density, the current characteristic variables of the bale (60, 62), such as current bale length, bale weight, calculated, bale density, and/or twine tension at the knotters.

## Revendications

1. Presse à balles rectangulaires (16), comprenant un cadre porteur (34) sur lequel s'appuie une chambre de pressage (38) munie de parois latérales (80) à position réglable à laquelle de la matière à presser peut être amenée au moyen d'un poussoir (20) se déplaçant en va-et-vient, **caractérisée par** un dispositif pour faire osciller les parois latérales (80).

2. Presse à balles rectangulaires (16) selon la revendication 1, dans laquelle les parois latérales (80) sont équipées de conicités (106).

3. Presse à balles rectangulaires (16) selon la revendication 1 ou 2, dans laquelle les parois latérales (80) peuvent être amenées à osciller en sens inverse.

4. Presse à balles rectangulaires (16) selon l'une quelconque des revendications 1 à 3, dans laquelle les parois latérales (80) sont réglables en position de manière statique par un premier actionneur (88) et peuvent être amenées à osciller par un deuxième actionneur (90).

5. Presse à balles rectangulaires (16) selon la revendication 4, dans laquelle le premier actionneur (88) coopère avec la paroi latérale (80) dans la zone arrière de la presse dans le sens de passage de la matière, et/ou le deuxième actionneur (90) est placé en amont du premier actionneur (88) par rapport au sens de passage de la matière.

6. Presse à balles rectangulaires (16) selon la revendication 4 ou 5, dans laquelle le deuxième actionneur (90) comprend un oscillateur à masse et un moteur d'entraînement (100).

7. Presse à balles rectangulaires (16) selon l'une quelconque des revendications 4 à 6, dans laquelle la fréquence et/ou l'amplitude d'oscillation du deuxième actionneur (90) est/sont variable(s).

8. Presse à balles rectangulaires (16) selon l'une quelconque des revendications 4 à 7, dans laquelle le premier actionneur (88) et/ou le deuxième actionneur (90) est/sont relié (s) à une unité de commande (98) pouvant être utilisée pour régler la force de pression du premier actionneur (88) et/ou la fréquence et/ou l'amplitude d'oscillation du deuxième actionneur (90) en fonction d'une ou de plusieurs des grandeurs suivantes : le type de la matière à presser, en particulier de la matière récoltée, entré par un utilisateur ou détecté par capteur, l'humidité de la matière à presser détectée par capteur, la force de pression du poussoir (20), le débit massique de la presse à balles rectangulaires (16) mesuré ou évalué à l'aide de données prévisionnelles, la vitesse de marche, le type de cycle de pressage, la position du poussoir (20), la pression du premier actionneur (88), les grandeurs cibles prévues pour la balle (60, 62), comme la longueur de balle, le poids de balle, la densité de balle, les grandeurs caractéristiques actuelles de la balle (60, 62), comme la longueur de balle actuelle, le poids de balle, la densité de balle calculée et/ou la tension de fil au niveau des nœuds.
